# EUROPÄISCHE PATENTANMELDUNG

(11) **EP 4 717 608 A1**
(43) Veröffentlichungstag der Anmeldung: **01.04.2026**
(21) Anmeldenummer: 24203616.8
(22) Anmeldetag: 30.09.2024
(51) Int. Cl.: B64F 1/36

(54) **ROBOTERGEFÜHRTES GEPÄCKAUFGABESYSTEM**

(71) Anmelder: Siemens Logistics GmbH, 90429 Nürnberg (DE)
(72) Erfinder: Klein, Matthias, 63456 Hanau (DE); Mueck, Bengt, 90429 Nürnberg (DE); Schneider, Wolfgang, 92729 Weiherhammer (DE)
(74) Vertreter: Siemens Patent Attorneys

(57) **Zusammenfassung**

In Flughäfen wird die Gepäckaufgabe zunehmend den Passagieren selbst übertragen. Die bekannten Einrichtungen führen bei hohem Verkehrsaufkommen zu einer Behinderung der Passagierströme. Es wird ein Gepäckaufgabesystem (1) angegeben, dass auch bei sehr hohem Passagieraufkommen die Passagierströme nicht behindert und unabhängig von den räumlichen Verhältnissen in einer Halle eines Flughafens flexibel an die Verhältnisse in der Halle anpassbar ist.

Dies wird erreicht durch den Einsatz eines Roboters (20), der die von den Passagieren (2) mit einem Gepäckstück (6) beladenen Transportbehälter aus den Gepäckaufgabeeinheiten (10) entnimmt und auf ein Transportband (12) legt. Vorzugsweise ist dieses Transportband (12) auf einer anderen Ebene als der Ebene der Passagiere. In einer besonderen Ausführungsform sind kreisförmige Gepäckaufgabe-Inseln (23) angegeben, die eine 360°-Zugänglichkeit aufweisen und in einer Flughafenhalle beliebig verteilt sein können.

## Beschreibung

Die vorliegende Erfindung betrifft ein Gepäckaufgabesystem zur selbständigen Aufgabe von Gepäck durch die Passagiere und ein Verfahren zum Betrieb eines solchen Gepäckaufgabesystems. In der englischen Fachsprache werden diese Gepäckaufgabesysteme als «self drop system» oder als «auto bag drop system» bezeichnet.

Solche Gepäckaufgabesysteme sind bekannt zB aus EP 2 886 466 A1 für eine «Check-in unit» [1] oder aus WO 2020/149801 A2 für ein «AN AUTOMATED BAG DROP SYSTEM» [2].

In den meisten Flughäfen werden die Passagiere beim Eingang zu einem Flughafengebäude unterschieden nach
- «Check-in» ist bereits erfolgt
   und nach
- «Check-in» muss noch im Flughafengebäude vorgenommen werden.
Insbesondere für die Passagiere, die ausserhalb des Flughafengebäudes einen «Check-in» bereits vorgenommen haben, muss eine Infrastruktur für die Gepäckaufgabe (=«bag drop») bereitgestellt werden. Diese Infrastruktur kann das Ausdrucken von Etiketten beinhalten, die an die aufzugebenden Gepäckstücke aufgebracht werden müssen. Oft können die Etiketten auch schon zuhause ausgedruckt und an die Gepäckstücke angebracht werden, so dass am Flughafen diese Gepäckstücke nur noch aufgegeben werden müssen.

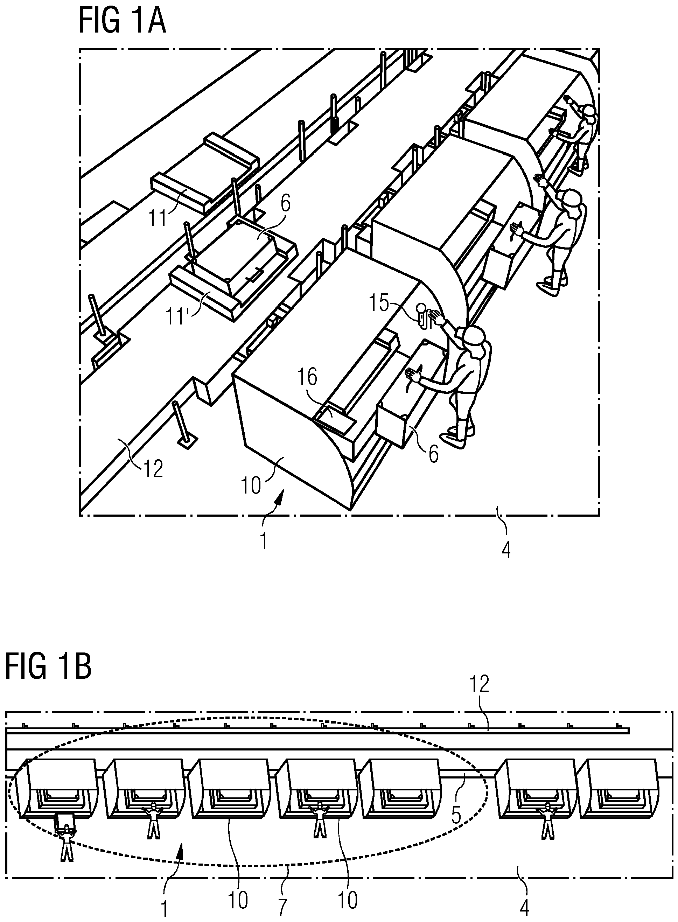

Die Aufgabe des mit einem Ziel beschrifteten Gepäcks kann mit Ablegen auf ein Band oder mit Ablegen in einen Transportwagen erfolgen. Dieses Ablegen erfolgt unkontrolliert. Daher werden vielfach sogenannte Kioskmaschinen oder Gepäckaufgabeeinheiten in den Hallen der Flughafengebäude bereitgestellt, in die die Gepäckstücke gelegt werden können. Dabei ist über einen Code, zB über einen Strich-Code des Flugtickets (Code gemäss IATA), die Zugehörigkeit der Gepäckstücke mit dem Passagier bzw. mit der vorgesehenen Flugroute sichergestellt. Diese Strich-Codes sind entweder auf dem Ticket in Papierform oder auf dem elektronischen Ticket als Datei enthalten. Der Vorteil dieser Gepäckaufgabe mit einem Code liegt in einer Kontrolle der Relation zwischen Gepäckstück und Flugticket sowie einem Beleg (meist elektronisch auf einem Smartphone) für den Passagier, dass er sein Gepäckstück tatsächlich aufgegeben hat. Ein Beispiel einer solchen Gepäckaufgabeeinheit 10 ist in FIG 1a gezeigt. Die aufgegebenen Gepäckstücke 6 werden gesichert erfasst und nach dem Schliessen mit einem Deckel oder Rolltor 17 (in der FIG 1a nicht dargestellt) auf einem Transportband 12 hinter der Gepäckaufgabeeinheit 10 weiterbefördert. Dieses Transportband 12 kann auf der gleichen Ebene, auf der sich auch die Passagiere befinden, installiert sein. Alternativ kann das Gepäckstück 6 auf einer der Gepäckaufgabeeinheit 10 zugeordneten Rutsche oder Transportband 12 auf eine tiefere Ebene als die Ebene der Passagierströme gefördert werden. Typischerweise sind mehrere Gepäckaufgabeeinheiten 10 einer (geraden) Linie angeordnet. Diese Linie kann durchaus Längen von 50m bis 100m aufweisen. Eine solche lange Linie ist hinderlich für die Passagierströme, insbesondere kreuzen sich hier die Passagiere in solche die zu den Gepäckaufgabeeinheiten zur Gepäckaufgabe gehen und solche Passagiere, die das Gepäck aufgegeben haben und sich Richtung «Gate» bewegen. Die Hinderung der Passagierströme ist unabhängig davon, ob diese Gepäckaufgabeeinheiten mitten in einer Halle oder entlang einer Wand aufgestellt sind wie dies in FIG 1b gezeigt ist. In dieser Konfiguration mit der Aufstellung längs einer Wand 5 werden die Gepäckstücke 6 auf der gleichen Ebene wie die Passagierebene auf ein dahinter angeordnetes Transportband 12 gefördert, dieses Transportband ist in den FIG 1a und FIG 1b nicht dargestellt.

Bei der Förderung der Gepäckstücke auf eine Ebene unterhalb der Passagierebene kann die Höhendifferenz beträchtlich sein, so dass eine Förderung nach unten im freien Fall auszuschliessen ist. Rutschen oder geneigte Transportbänder benötigen jedoch relativ viel Platz.

Der vorliegenden Erfindung liegt daher die Aufgabe zugrunde, ein Gepäckaufgabesystem anzugeben, dass auch bei sehr hohem Passagieraufkommen die Passagierströme nicht behindert und unabhängig von den räumlichen Verhältnissen in einer Halle eines Flughafens flexibel an die Verhältnisse in der Halle anpassbar ist.

Diese Aufgabe wird durch die im Patentanspruch 1 angegebenen Merkmale für ein Gepäckaufgabesystem und durch die im Patentanspruch 12 für ein Verfahren zum Betrieb eines solchen Gepäckaufgabesystem angegebenen Merkmale gelöst. Vorteilhafte Ausgestaltungen der Erfindung sind in weiteren Ansprüchen angegeben.

Das erfindungsgemäße Gepäckaufgabesystem zeichnet sich aus durch ein:
Gepäckaufgabesystem umfassend mehrere Gepäckaufgabe-einheiten zur Aufgabe von Gepäckstücken durch Passagiere, wobei jede Gepäckaufgabeeinheit aufweist:
   - einen Innenraum mit einer Abgabefläche, auf die ein Transportbehälter für die Aufgabe eines Gepäckstückes (6) platzierbar ist,
das dadurch gekennzeichnet ist, dass
   - ein leerer Transportbehälter auf die Abgabefläche durch einen Roboter mit einer zugehörigen Robotersteuerung platzierbar ist,
   - der Transportbehälter durch einen Passagier mit einem Gepäckstück beladbar ist,
   - der durch einen Passagier mit einem Gepäckstück beladene Transportbehälter ist durch den Roboter greifbar und durch den Roboter auf eine Abgabeposition ablegbar.

Das erfindungsgemässe Verfahren nach Anspruch 12 zeichnet sich aus durch ein:
Verfahren zum Betreiben eines Gepäckaufgabesystems, das mehrere Gepäckaufgabeeinheiten aufweist und wobei jede Gepäckaufgabeeinheit enthält:
   - einen Innenraum mit einer Abgabefläche, auf die ein Transportbehälter für die Aufgabe eines Gepäckstückes platzierbar ist,
das gekennzeichnet ist durch die Verfahrensschritte:
   ein leerer Transportbehälter wird auf die Abgabefläche durch einen Roboter (mit einer zugehörigen Robotersteuerung platziert,
   - ein aufzugebendes Gepäckstück wird durch einen Passagier auf den Transportbehälter gelegt,
   - der durch einen Passagier mit einem Gepäckstück beladene Transportbehälter wird durch den Roboter erfasst und auf eine Abgabeposition für den Weitertransport abgelegt.

Die Ausgestaltung eines mehrere Gepäckaufgabeeinheiten umfassendes Gepäckaufgabesystems mit einem Roboter hat folgende Vorteile:
(i) Der Einsatz eines Roboters erlaubt, mehrere Gepäckaufgabeeinheiten bedienen zu können. Bei einer Anordnung der Gepäckaufgabeeinheiten in einer Linie kann der Roboter fahrbar parallel entlang dieser Linie ausgebildet sein. Eine Beschränkung ist lediglich durch die Kapazität gegeben, die durch die Wartezeit an einer mit einem Gepäckstück versehenen Gepäckaufgabeeinheit bestimmt ist. Wartezeit ist hier die mittlere Zeit, bis das Gepäckstück nach erfolgter Ablage durch einen Passagier vom Roboter erfasst, auf eine Abgabeposition wie zB ein Transportband oder ein AGV gelegt und die Gepäckaufgabeeinheit wieder bereit ist, ein weiteres Gepäckstück aufzunehmen.
ii) Der Einsatz eines Roboters ermöglicht in jeder Hinsicht weitere Freiheitsgrade bei der Realisation eines Gepäckaufgabesystems: Damit ist es wahlweise möglich, die Weiterbeförderung der aufgegebenen Gepäckstücke auf ein Transportband vorzunehmen, das entweder auf der gleichen Ebene wie die Passagierebene angeordnet ist oder auf einer von der Passagierebene verschiedenen Ebene angeordnet ist. Ebenso ist ein gemischter Betrieb möglich, heisst bei einzelnen Gepäckaufgabeeinheiten erfolgt der Weitertransport der Gepäckstücke auf der gleichen Ebene auf der sich auch die Passagiere befinden, bei anderen Gepäckaufgabeeinheiten erfolgt der Weitertransport auf einer zweiten von der Passagierebene verschiedenen Ebene. Ohne den Einsatz eines Roboters sind die vorgenannten Freiheitsgrade bei der Realisation eines Gepäckaufgabesystems mit mehreren Gepäckaufgabeeinheiten nicht realisierbar.
iii) Durch den Einsatz eines oder mehrere Roboter ist eine einfache Skalierbarkeit bezüglich des Betriebs und bezüglich Konzeption eines Gepäckaufgabesystems in einer bestehenden Flughafenhalle möglich. Bezüglich Konzeption erlaubt ein Roboter einen Transport von mit einem Gepäckstück beladenen Transportbehälter, ohne dass in der Halle dazu wertvoller Platz benötigt wird, da der Roboter diesen Transport praktisch vertikal vornehmen kann.
iv) Es ist leicht möglich, bestehende Gepäckaufgabeeinheiten für den Weitertransport der mit einem Gepäckstück beladenen Transportbehälter mit einem Roboter umzurüsten, dabei kann ein Roboter für mehrere Gepäckaufgabeeinheiten vorgesehen sein, zB bei Anordnung der Gepäckaufgabeeinheiten in einer Linie oder bei einer kreisförmigen Anordnung der Gepäckaufgabeeinheiten als eine sogenannte Gepäckaufgabe-Insel.
v) Eine kreisförmige Anordnung der Gepäckaufgabeeinheiten hat den Vorteil einer 360°-Zugänglichkeit für die Passagiere und eine freie Platzierbarkeit in einer Halle eines Flughafens. Freie Platzierbarkeit heisst, dass die Platzierung nur durch Gebäudebeschränkungen wie Stützpfeiler oder Stützwände eingeschränkt wird. Es bestehen jedoch keine Einschränkungen die durch ein solches Gepäckaufgabesystem selber vorgegeben sind.

Weitere vorteilhafte Ausführungsformen der Erfindung sind in den abhängigen Patentansprüchen angegeben.

Die Erfindung wird nachfolgend anhand der Zeichnung beispielsweise näher erläutert. Dabei zeigen:
FIG 1a Perspektivische Ansicht eines Gepäckaufgabesystems, das mehrere in einer Linie angeordnete Gepäckaufgabeeinheiten aufweist, welches Gepäckaufgabesystem frei in einer Halle eines Flughafengebäudes angeordnet ist;
FIG 1b Perspektivische Ansicht eines Gepäckaufgabesystems, das mehrere in einer Linie angeordnete Gepäckaufgabeeinheiten aufweist, welches Gepäckaufgabesystem längs einer Wand in einer Halle eines Flughafengebäudes angeordnet ist;
FIG 2 Grundriss eines robotergeführten Gepäckaufgabesystems bei dem sich Passagierebene und Gepäckebene nicht unterscheiden;
FIG 3a Initialsituation vor Aufgabe eines Gepäckstückes;
FIG 3b Situation nach Aufgabe eines Gepäckstückes;
FIG 3c Situation beim Erfassen des Gepäckstückes durch den Roboter nach Schliessung des Innenraums mit einem Rolltor;
FIG 4 Perspektivische Darstellung einer Gepäckaufgabe-Insel mit einer Zugänglichkeit von allen Seiten;
FIG 5 Aufsicht auf eine matrixartig angeordnete Mehrzahl von Gepäckaufgabe-Inseln und Darstellung der resultierenden ungehinderten Passagierströme;
FIG 6 Detaillierte Darstellung der verschiedenen Einheiten einer Gepäckaufgabe-Insel.

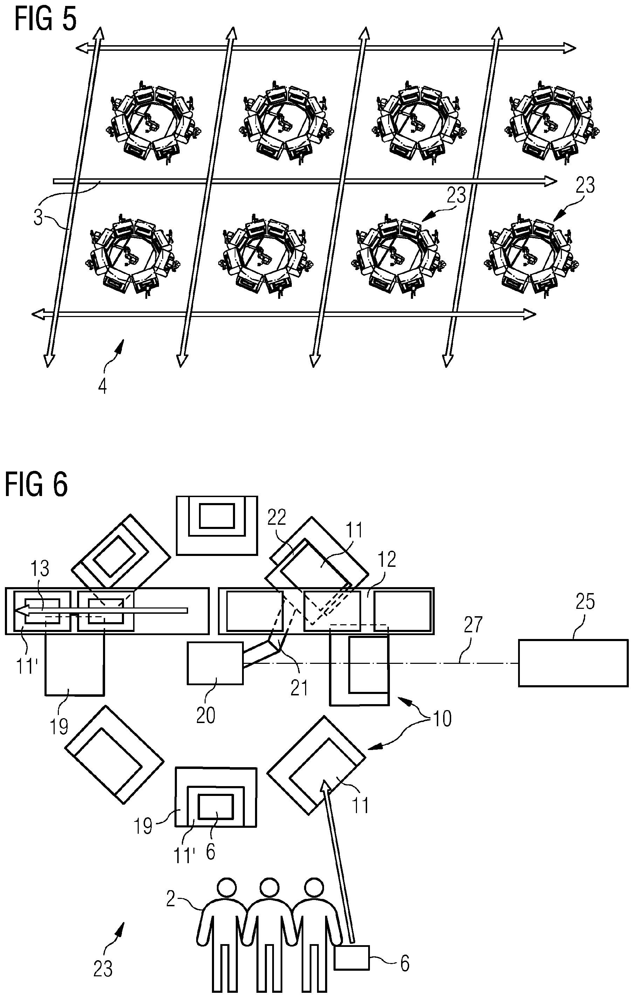

Zunächst wird die Begrifflichkeit «Roboter» 20 näher erläutert. Diese Begrifflichkeit «Roboter» 20 beinhaltet:
- Sensoren zur Erfassung der Umwelt und der Achspositionen des Roboters,
- Aktoren zur Betätigung von Roboterarmen, Roboterfinger, usw,
- eine Robotersteuerung 25,
- mechanische Komponenten einschliesslich Getriebe.
Die für ein Gepäckaufgabesystem eingesetzten Roboter sind sogenannte Mehrachsenroboter, vorzugsweise Sechs-Achs-Roboter. Im Folgenden ist jedoch stets nur von einem «Roboter 20» die Rede und die weiteren Komponenten wie Sensoren, Aktoren Robotersteuerung etc. werden als bekannt vorausgesetzt, so dass die vorgenannten Elemente im Folgenden nicht mehr besonders erwähnt oder erklärt zu werden brauchen. Daher ist lediglich in FIG 6 eine abgesetzte Robotersteuerung 25 mit einer Verbindungsleitung 27 zum Roboter 20 gezeigt.

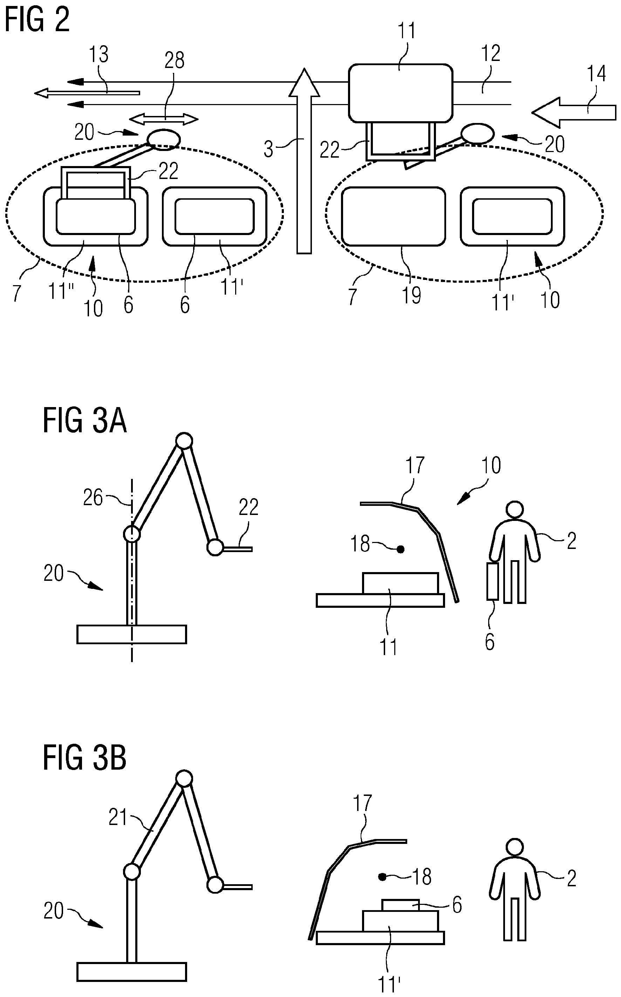

FIG 1a zeigt eine perspektivische Ansicht eines Gepäckaufgabesystems 1, das mehrere in einer Linie angeordnete Gepäckaufgabeeinheiten 10 aufweist. Wichtig sind hier ein Bildschirm 16 und ein Eingabegeräte 15 pro Gepäckaufgabeeinheit 10 für die Interkation zwischen einem Passagier 2 und der betreffenden Gepäckaufgabeeinheit 10. Diese Darstellung entspricht einerseits dem Stand der Technik. Das gezeigte Eingabegeräte ist als sogenannte Lesepistole ausgebildet. Ebenso gut kann im Innenraum ein Leser vorgesehen sein, der den auf dem Gepäckstück vom Passagier aufgebrachten Code für die weitere Verarbeitung erfasst. Die Anordnung gemäss der FIG 1a kann auch für ein Ausführungsbeispiel der vorliegenden Erfindung verwendet werden wie dies in FIG 1b und FIG 2 gezeigt ist.

FIG 2 zeigt das Funktionsprinzip eines Gepäckaufgabesystems 1 bei einer linearen Anordnung von mehreren Gepäckaufgabeeinheiten 10 in einer Aufsicht. Es sind zwei Gruppen 7 von Gepäckaufgabeeinheiten 10 dargestellt. In der Darstellung gemäss FIG 2 sind pro Gruppe lediglich zwei Gepäckaufgabeeinheiten 10 gezeigt. In einer konkreten Ausführungsform in einem Flughafen sind für eine solche Gruppe deutlich mehr als zwei Gepäckaufgabeeinheiten 10 vorgesehen. Die Anzahl solcher Gepäckaufgabeeinheiten 10 ist nur durch die räumlichen Grundbedingungen in einer Halle und durch die Kapazität eines Roboters 20 beschränkt, da ein einziger Roboter 20 pro Gruppe 7 vorgesehen ist. Diese Anordnung von Gruppen erlaubt, zwischen zwei Gruppen einen Durchgang für den Passagierstrom 3 vorzusehen. Dies ist möglich, weil die Ebene für das Transportband 12 (=Gepäckebene) vorzugsweise unterhalb der Passagierebene angeordnet ist. Eine Anordnung der Gepäckebene oberhalb der Passagierebene ist auch möglich. Die Roboter 20 sind je parallel in der Richtung 28 zum Transportband 12 fahrbar, um die einzelnen Gepäckaufgabeeinheiten 10 mit leeren Transportbehältern 11 und mit beladenen Transportbehältern 11' bedienen zu können. Das Transportband 12 weist die Bewegungsrichtung 13 auf.
Gemäss der Darstellung im rechten Teil von FIG 2 transportiert der Roboter 20 mit den Roboterfingern 22 einen leeren Transportbehälter 11 vom Transportband 12 zur Abgabefläche 19 einer Gepäckaufgabeeinheit 10. Ganz rechts im rechten Teil von FIG 2 wartet ein mit einem Gepäckstück 6 beladener Transportbehälter 11' für den Weitertransport auf dem Transportband 12.
Gemäss der Darstellung im linken Teil von FIG 2 erfasst der Roboter 20 mit seinen Roboterfingern 22 einen mit einem Gepäckstück 6 beladenen Transportbehälter 11'' zur Platzierung auf das Transportband 12. Ebenfalls ist im linken Teil von FIG 2 ein mit einem Gepäckstück 6 beladener Transportbehälter 11' gezeigt, der für den Weitertransport auf dem Transportband 20 wartet.

In FIG 2 ist im rechten Teil noch eine alternative Versorgung mit leeren Transportbehältern gezeigt: Anstelle des Heranführens von leeren Transportbehältern 11 über das Transportband 12 ist ein Transportbehälterstapel 14 mit leeren Transportbehältern 11 vorgesehen. Der Roboter 20 entnimmt somit die leeren Transportbehälter 11 diesem Transportbehälterstapel 14. Dieser Transportbehälterstapel 14 kann ebenfalls automatisiert oder manuell im Greifbereich des Roboters 20 bereitgestellt werden.

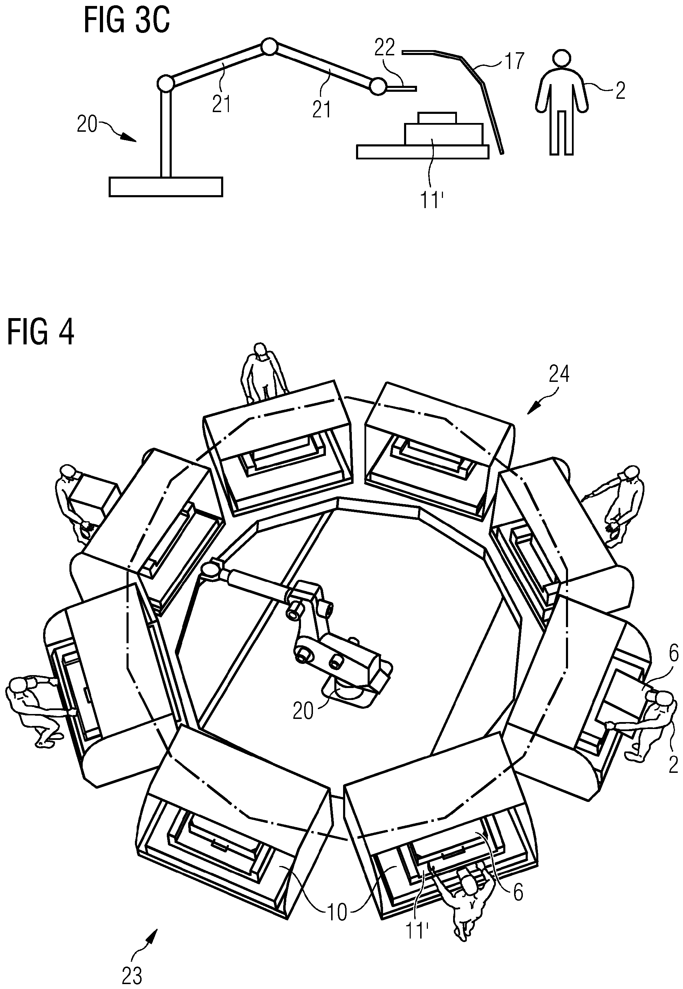

Die FIG 3a, FIG 3b und FIG 3c zeigen die beispielhafte Abfolge bei einer Gepäckaufgabe durch einen Passagier 6.
In FIG 3a wartet einen Passagier 2 mit einem Gepäckstück 6 vor einer mit einem Rolltor 17 verschlossenen Gepäckaufgabeeinheit 10. Nach einer Interaktion dieses Passagiers 2 mit dem Eingabegerät 15 und dem Bildschirm 16 (in den FIG 3a bis FIG 3c nicht dargestellt) öffnet sich die Gepäckaufgabeeinheit 10. Nach dem Ablegen des Gepäckstücks 6 auf den Transportbehälter 11' zeigt sich die Situation gemäss FIG 3b. Entweder durch
- einen Detektor der den Innenraum 18 überwacht oder durch
- eine Interaktion des Passagiers 2
   oder durch
- eine Totzeit («time out») schliesst sich die Gepäckaufgabeeinheit 10 mit dem Rolltor 17. In der Folge ergreift der Roboter 20 mit den Roboterfingern 22 den beladenen Transportbehälter 11' für den Weitertransport auf ein nicht dargestelltes Transportband 12, das wie vorstehend ausgeführt auf der gleichen Ebene wie die Passagierebene oder vorzugsweise auf einer Ebene unterhalb der Passagierebene angeordnet sein kann.

FIG 4 zeigt eine perspektivische Darstellung einer Gepäckaufgabe-Insel 23 mit hier acht Gepäckaufgabeeinheiten 10, die in einem Kreis 24 angeordnet sind. Im Zentrum dieses Kreises 24 ist ein Roboter 20 auf einer tieferen Ebene als die Passagierebene installiert. Die Roboterachse 26 des Roboter 20 (vgl. FIG 3a) ist im Zentrum dieses Kreises 24. Die Gepäckaufgabeeinheiten 10 sind bezüglich Bedienung gleich ausgebildet wie vorgängig erläutert bei einer linienförmigen Anordnung. Auf der tieferen Ebene wo der Roboter installiert ist, befindet sich ein Transportband 12. Dies ist in dieser perspektivischen Darstellung von FIG 4 nicht gezeigt. Aus dieser Darstellung ist eine 360°-Zugänglichkeit für die Passagiere 2 gut erkennbar. Diese 360°-Zugänglichkeit reduziert die Gefahr einer Passagierkolonnenbildung ganz erheblich.

FIG 6 zeigt in einer Sicht von oben die funktionalen Einheiten einer Gepäckaufgabe-Insel 23. Ein Transportband 13 mit der Transportrichtung 13 ist etwas abgesetzt vom Zentrum der kreisförmigen Anordnung 24 der Gepäckaufgabeeinheiten 10. Der Roboter 20 ist über eine Verbindungsleitung 27 mit einer Robotersteuerung 25 verbunden. In aller Regel ist die Robotersteuerung 25 vom Roboter 20 abgesetzt.
Der über die Robotersteuerung 25 geführte Roboter 20 ist mit seinen Roboterfingern 22 gerade im Begriff, einen leeren Transportbehälter 11 auf eine Abgabefläche 19 einer Gepäckaufgabeeinheit 10 abzulegen. In der FIG 6 sind drei mit einem Gepäckstück 6 beladene Transportbehälter 11' auszumachen, die auf den Weitertransport durch den Roboter 20 warten. Ebenso sind drei Gepäckaufgabeeinheiten 10 auszumachen die für die Aufgabe eines Gepäckstücks 6 bereit sind. Ganz links in der FIG 6 ist ein Gepäckaufgabeeinheit 10 mit einer Abgabefläche 19 gezeigt, die auf eine Belieferung mit einem leeren Transportbehälter 11 wartet.

FIG 5 zeigt eine Aufsicht auf eine matrixartig angeordnete Mehrzahl von Gepäckaufgabe-Inseln 23 in einer Abflughalle 4 eines Flughafens. Die Platzierung dieser Gepäckaufgabe-Inseln 23 unterliegt nur Beschränkungen durch das Gebäude wie zB Stützmauern, Stützsäulen, die Dimensionierung des Zugangs- und Wegganges der Passagiere 2 und somit der zu erwartenden Passagierströme 3.

Das Verfahren zum Betreiben eines Gepäckaufgabesystems 1, das mehrere Gepäckaufgabeeinheiten 10 aufweist, erlaubt ein «fine-tuning» solcher Gepäckaufgabesysteme 1, die wenigstens einen Roboter 20 enthalten wie zB
i) Unterschiedliche Dimensionierung der Gepäckaufgabeeinheiten 10 abhängig von den verschieden Grössen der Gepäckstücke 6. Für übergrosse Gepäckstücke kann bei den Gepäckaufgabeeinheiten 10 zusätzlich ein Bezahlterminal vorgesehen sein,
ii) abhängig von der Gebäudeinfrastruktur ein gemischter Betrieb der Transportbänder sowohl oberhalb als auch unterhalb der Passagierebene. Ebenso ist ein gemischter Betrieb von in einer Linie angeordneter Gepäckaufgabeeinheiten 10 wie auch in Gepäckaufgabe-Inseln angeordnete Gepäckaufgabeeinheiten 10 möglich, ohne den Grundgedanken der vorliegenden Erfindung - nämlich der Einsatz von Robotern - zu verlassen.

Die verschiedenen vorstehend beschriebenen Ausführungsbeispiele weisen als Abgabeposition 12 ein Transportband 12 auf. Der Grundgedanke dieser Erfindung mit dem Weitertransport unmittelbar nach Abgabe eines Gepäck-stücks 6 durch einen Passagier 2 mit einem Roboter 20 ändert sich nicht, wenn anstelle eines Transportbandes 12 ein «automated guided vehicle» AGV oder ein Regal 12 vorgesehen ist. Diese weiteren Möglichkeiten werden im Sinne dieser Schrift unter dem Oberbegriff Ablageposition 12 subsummiert.

### Liste der Bezugszeichen, Glossar

- 1: Gepäckaufgabesystem
- 2: Passagier, Passagier
- 3: Passagierstrom
- 4: Halle, Abflughalle
- 5: Wand; Linie
- 6: Gepäckstück
- 7: Gruppe von mehreren Gepäckaufgabeeinheiten 10, die von einem Roboter 20 bedient werden
- 10: Gepäckaufgabeeinheit, baggage check-in unit, baggage check-in unit
- 11: Transportbehälter, leer; Tray;
- 11': mit einem Gepäckstück 6 beladener Transportbehälter
- 11'': beladener Transportbehälter 11 erfasst von Roboterfinger 22 zur Ablage auf eine Abgabeposition wie zB Transportband 12
- 12: Abgabeposition wie Transportband, Bandförderer, Trayförderer, AGV oder Regal
- 13: Bewegungsrichtung von Transportbehälter 11 auf einem Transportband 12
- 14: Transportbehälterversorgung, Transportbehälterstapel
- 15: Eingabegerät
- 16: Bildschirm
- 17: Rolltor, Deckel
- 18: Innenraum
- 19: Abgabefläche, Abgabefläche in einer Gepäckaufgabeeinheit
- 20: Mehrachsenroboter; kurz «Roboter»
- 21: Roboterarm; Roboterunterarm, Roboteroberarm
- 22: Roboterfinger
- 23: Gepäckaufgabe-Insel
- 24: Kreis, kreisförmig
- 25: Robotersteuerung
- 26: Drehachse des Roboters
- 27: Verbindungsleitung Roboter 20 mit Robotersteuerung 25
- 28: zu einem Transportband 12 oder zu einer Wand 5 parallele Fahrbarkeit eines Roboters 29

### Akronyme

- IATA: International Air Transport Association
- AGV: Automated Guided Vehicle

### Liste der zitierten Dokumente

[1] EP 2 886 466 A1
   «Check-in unit»
   Anmelderin:
      Siemens Aktiengesellschaft; DE - 80333 München
[2] WO 2020/149801 A2
   «AN AUTOMATED BAG DROP SYSTEM»
   Anmelder:
      SARI, Selim, TR - Maltepe/Istanbul

## Patentansprüche

1. Gepäckaufgabesystem (1) umfassend mehrere Gepäckaufgabeeinheiten (10) zur Aufgabe von Gepäckstücken (6) durch Passagiere (2), wobei jede Gepäckaufgabeeinheit (10) aufweist:
- einen Innenraum (18) mit einer Abgabefläche (19), auf die ein Transportbehälter (11) für die Aufgabe eines Gepäckstückes (6) platzierbar ist,
**dadurch gekennzeichnet, dass**
- ein leerer Transportbehälter (11) auf die Abgabefläche (19) durch einen Roboter (20) mit einer zugehörigen Robotersteuerung (25) platzierbar ist,
- der Transportbehälter (11) durch einen Passagier (2) mit einem Gepäckstück (6) beladbar ist,
- der durch einen Passagier (2) mit einem Gepäckstück (6) beladene Transportbehälter (11') ist durch den Roboter (20) greifbar und durch den Roboter (20) auf eine Abgabeposition (12) ablegbar.

2. Gepäckaufgabesystem (1) nach Anspruch 1,
**dadurch gekennzeichnet, dass**
zur Bedienung einer Gepäckaufgabeeinheit (10) jede Gepäckaufgabeeinheit (10) mit einem Bildschirm (16) versehen ist.

3. Gepäckaufgabesystem (1) nach Anspruch 1 oder 2,
**dadurch gekennzeichnet, dass**
mehrere Gepäckaufgabeeinheiten (2) in einer Linie (5) angeordnet sind.

4. Gepäckaufgabesystem (1) nach Anspruch 3,
**dadurch gekennzeichnet, dass**
mehrere Gepäckaufgabeeinheiten (2) als Gruppe (7) ausgebildet sind und pro Gruppe (7) wenigstens ein Roboter (20) vorgesehen ist.

5. Gepäckaufgabesystem (1) nach Anspruch 4,
**dadurch gekennzeichnet, dass**
der Roboter (20) parallel zur Linie (5) fahrbar ist.

6. Gepäckaufgabesystem (1) nach einem der Ansprüche 3 bis 5, **dadurch gekennzeichnet, dass**
ein als Abgabeposition (12) vorgesehenes Transportband (12) auf einer anderen Ebene als auf der Ebene der Passagiere (2) und der Gepäckaufgabeeinheiten (10) installiert ist.

7. Gepäckaufgabesystem (1) nach Anspruch 1 oder 2,
**dadurch gekennzeichnet, dass**
mehrere Gepäckaufgabeeinheiten (2) kreisförmig (24) angeordnet sind und so eine Gepäckaufgabe-Insel (23) mit einer 360°-Zugänglichkeit bilden, wobei der Roboter (20) im Zentrum der kreisförmigen Anordnung installiert ist.

8. Gepäckaufgabesystem (1) nach Anspruch 7,
**dadurch gekennzeichnet, dass**
dass der Roboter (20) auf einer tieferen Ebene als die Ebene der Passagiere (2) und der Gepäckaufgabeeinheiten (2) installiert ist.

9. Gepäckaufgabesystem (1) nach Anspruch 7 oder 8,
**dadurch gekennzeichnet, dass**
mehrere Gepäckaufgabe-Inseln (23) in matrixartig in einem Flughafengebäude installiert sind.

10. Gepäckaufgabesystem (1) nach einem der Ansprüche 1 bis 8,
**dadurch gekennzeichnet, dass**
leere Transportbehälter (11) auf dem für den Abtransport der beladenen Transportbehälter (11') verwendeten Transportband (12) herangeführt werden und vom Roboter (20) auf die Ablagefläche ablegbar sind.

11. Gepäckaufgabesystem (1) nach einem der Ansprüche 1 bis 9,
**dadurch gekennzeichnet, dass**
die leeren Transportbehälter (11) vom Roboter (20) von einem Transportbehälterstapel (14) entnehmbar sind und auf die Ablagefläche (19) ablegbar sind.

12. Verfahren zum Betreiben eines Gepäckaufgabesystems (1), das mehrere Gepäckaufgabeeinheiten (10) aufweist und wobei jede Gepäckaufgabeeinheit (10) enthält:
- einen Innenraum (18) mit einer Abgabefläche (19), auf die ein Transportbehälter (11) für die Aufgabe eines Gepäckstückes (6) platzierbar ist,
**gekennzeichnet durch** folgende Verfahrensschritte:
- ein leerer Transportbehälter (11) wird auf die Abgabefläche (19) durch einen Roboter (20) mit einer zugehörigen Robotersteuerung (25) platziert,
- ein aufzugebendes Gepäckstück (6) wird durch einen Passagier (2) auf den Transportbehälter (11) gelegt,
- der durch einen Passagier (2) mit einem Gepäckstück (6) beladene Transportbehälter (11'') wird durch den Roboter (20) erfasst und auf ein Transportband (12) für den Weitertransport abgelegt.

13. Verfahren nach Anspruch 12
**dadurch gekennzeichnet, dass**
sich Passagiere (6) und Transportband (12) auf einer gleichen Ebene befinden.

14. Verfahren nach Anspruch 12
**dadurch gekennzeichnet, dass**
sich Passagiere (6) und Transportband (12) auf verschiedenen Ebenen befinden.

15. Verfahren nach einem der Ansprüche 12 bis 14 **dadurch gekennzeichnet, dass**
die leeren Transportbehälter (11) entweder
- mit dem Transportband (12) herangeführt werden und vom Roboter (20) vom Transportband (12) entnommen werden oder
- oder vom Roboter (20) von einem Transportbehälterstapel (14) entnommen werden.
